# EUROPEAN PATENT SPECIFICATION

(11) **EP 3 418 071 B1**
(45) Date of publication and mention of the grant of the patent: **16.08.2023**
(21) Application number: 18177402.7
(22) Date of filing: 12.06.2018
(51) Int. Cl.: B60B 39/12

(54) **A GRIP MAT**
GREIFMATTE
TAPIS DE PRÉHENSION

(30) Priority: 20.06.2017 GB 201709783
(43) Date of publication of application: 26.12.2018
(73) Proprietor: Milenco Limited, Milton Keynes, Buckinghamshire MK12 5TS (GB)
(72) Inventor: Milbank, Frederick Nigel, Milton Keynes, Buckinghamshire MK13 0RA (GB)
(74) Representative: Stevens Hewlett & Perkins

(56) References cited:
- EP-A2- 1 431 074
- AU-B2- 2015 238 916
- FR-A- 933 422
- US-A- 4 278 203

## Description

This invention relates to a grip mat for a vehicle and to a method of using the grip mat.

It is well known amongst vehicle drivers that if the surface underneath the vehicle is slippery, for example through wet grass and mud, sand or snow and ice, that it can be difficult to move the vehicle off the slippery surface. Although the vehicle engine can be started and the engine's drive passed to the vehicle's wheels, the wheels will rotate without engaging the slippery surface in a phenomenon known as "wheel spin". Such a problem is often suffered by caravan owners and users of off road vehicles and motor homes, since caravans for example are often sited in open fields and wet weather can render such fields very slippery for vehicle drivers. To ameliorate this problem, the grip mats are often used by vehicle drivers. One or more grip mats are placed on the ground as close as possible to the vehicle wheels, and when the vehicle's engine drive is passed to the vehicle's wheels, the wheels will grip the grip mat rather than the slippery surface. While grip mats can be very useful, they often do not provide enough flexibility in their design, especially with respect to the width and length of area that can be covered by a grip mat. Examples of grip mats are disclosed in FR 933,422 and EP 1,431,074. Document FR 933,422 discloses elongated plates which have a regular arrangement of elevations. These elevations are provided with openings in some embodiments. Document EP 1,431,074 also shows elongated plates with regularly arranged elevations. Several plates can be connected by partially superimposing them.

It is therefore an object of the invention to improve upon the known art.

According to a first aspect of the present invention, there is provided a grip mat for a vehicle comprising an elongate lattice-form body comprising spaced apart wave-form elements running across the width of the elongate body and connecting elements connecting adjacent wave-form elements, each wave-form element being connected to each adjacent wave-form element by a series of spaced apart connecting elements, wherein the width of each wave-form element is less than the width of the spacing between adjacent wave-form elements.

According to a second aspect of the present invention, there is provided a method of using two or more grip mats according to the first aspect of the invention, the method comprising receiving two grip mats, laying a first grip mat on the ground, inverting a second grip mat relative to the first grip mat, connecting together the first grip mat and the second grip mat such that the wave-form elements of the first grip mat are located in the spacing between adjacent wave-form elements of the second grip mat and the wave-form elements of the second grip mat are located in the spacing between adjacent wave-form elements of the first grip mat.

Owing to the invention, it is possible to provide a grip mat that can be used in conjunction with other grip mats of the same design, which will easily and effectively connect together in any combination desired by the user and also individually or in combination provide good gripping qualities both above (to the vehicle wheel) and below (to the ground). The provision of the wave-form elements on the body of the grip mat that are spaced apart by a distance that is greater than the width of the wave-form elements means that two adjacent grip mats can securely connect together, with the wave-form elements on one grip mat locating in the spacing between the wave-form elements on the other grip mat and vice versa. The design of the grip mats is such that two grip mats can be connected in a very wide range of different configurations. In addition, the use of the wave-form elements ensures that the two grip mats that are connected together will interlock in such a fashion that the height of the grip mats is not increased. The presence of the wave form elements and the apertures in-between the wave-form elements provide excellent gripping properties to the wheel above and the ground below by providing a large number of pressure points on the grip mat.

The grip mat comprises connecting elements connecting adjacent wave-form elements and each wave-form element is connected to each adjacent wave-form element by a series of spaced apart connecting elements. The grip mat derives strength and flexibility from the construction using the wave-form elements that are connected together using the connecting elements which are spaced apart from one another across the grip mat. A lattice-form arrangement is created from the combination of the wave-form elements and the connecting elements. The wave-form elements travel continuously across the width of the grip mat and the connecting elements are perpendicular to the wave-form elements but are not continuous along the length of the grip mat. The connecting elements simply connect adjacent wave-form elements.

Embodiments of the present invention will now be described, by way of example only, with reference to the accompanying drawings, in which:-
Figure 1 is a perspective view of a grip mat,
Figure 2 is an end view of the grip mat,
Figure 3 is a top plan view of the grip mat,
Figure 4 is a perspective view of two grip mats connected together,
Figure 5 is a perspective view of two grip mats connected together in a different configuration, and
Figure 6 is a close-up of a connection between the two grip mats of Figure 5.

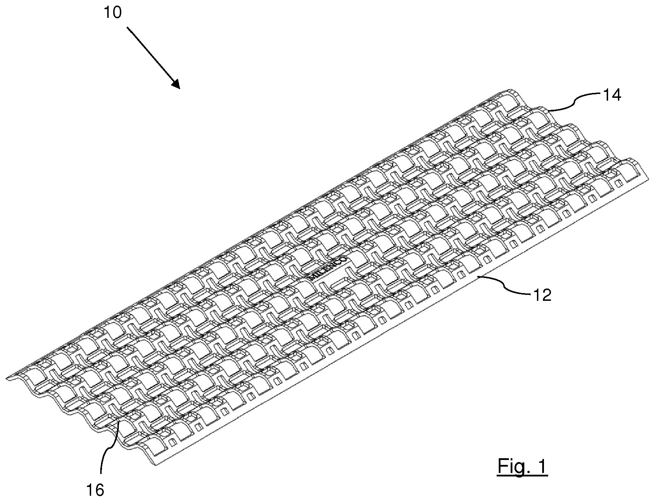

Figure 1 shows a grip mat 10 that comprises an elongate body 12 formed of spaced apart wave-form elements 14 running across the width of the elongate body 12. The width of each wave-form element 14 is less than the width of the spacing between adjacent wave-form elements 14. The elongate body 12 is lattice-form and the wave-form elements 14 are regularly spaced along the length of the elongate body 12. The grip mat 10 further comprises connecting elements 16 connecting adjacent wave-form elements 14. Each wave-form element 14 is connected to each adjacent wave-form element 14 by a series of spaced apart connecting elements 16. The connecting elements 16 are parallel to each other and perpendicular to the wave-form elements 14.

The grip mat 10 is constructed as a single piece that is moulded from plastics material in a single mould. The grip mat 10 is flexible not rigid and has enough flexibility that the grip mat 10 can be folded in half lengthways such that the two opposite ends can be brought into contact. The grip mat 10 is designed to be used as a flat planar structure lying on the ground, so that a wheel of a vehicle can get grip from the grip mat 10 when trying to move off slippery ground, such as a wet and muddy field. The grip mat 10 can be used in either orientation, with the top upwards as shown in Figure 1 or with the bottom upwards.

The wave-form elements 14 are located perpendicular to the longitudinal axis of the elongate body 12 and the connecting elements 16 are located parallel to the longitudinal axis of the elongate body 12. The grip mat 10 provides strength and flexibility, which is derived from the construction using the wave-form elements 14 that are connected together using the connecting elements 16 which are spaced apart from one another across the grip mat 10. A lattice-form arrangement is created from the combination of the wave-form elements 14 and the connecting elements 16, with rectangular apertures formed in the body 12 by the wave-form elements 14 and the connecting elements 16. The lattice created by the elements 14 and 16 creates a discontinuous surface that provides good grip for a vehicle wheel.

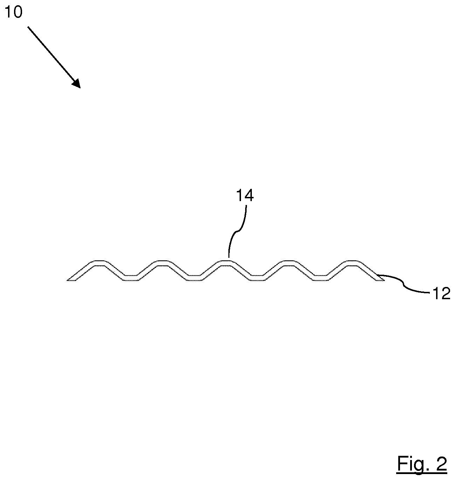

Figure 2 shows an end on view of the grip mat 10, which shows in more detail the shape of the wave-form elements 14. The wave-form of each of the elements 14 is a regular sine wave that travels across the body 12 of the grip mat 10. The shape of the elements 14 is designed to be effective whichever way up the grip mat 10 is used and also to provide a good engagement between the surface of the grip mat 10 and a wheel of a vehicle that is contacting the grip mat 10. The wave-form elements 14 are evenly spaced along the length of the grip mat 10 and are all in phase with each other.

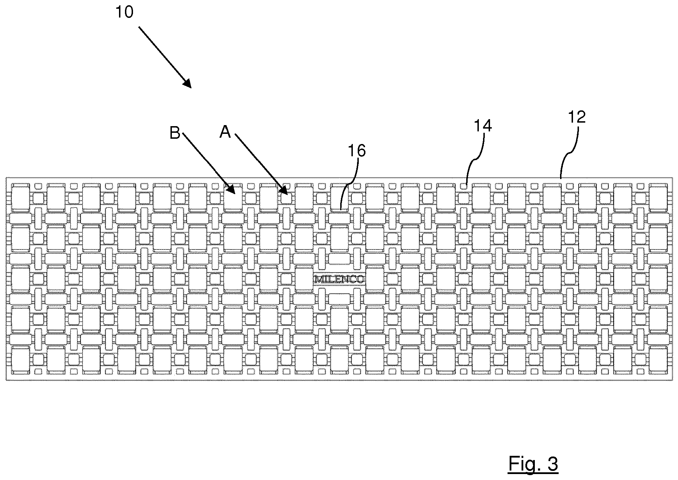

Figure 3 shows a top plan view of the grip mat 10, which shows clearly the lattice-form body 12, which is formed by the wave-form elements 14 that run across the width of the elongate body 12 and the connecting elements 16 which run along the length of the elongate body 12 and connect together adjacent wave-form elements 14. The wave-form elements 14 and the connecting elements16 together form a regular repeating pattern along the whole length of the elongate body 12, creating rectangular apertures through the elongate body 12. The width A of each wave-form element 14 is less than the width B of the spacing between adjacent wave-form elements 14. This supports the interlocking of two adjacent grip mats 10, when a user desires to use more than one grip mat 10.

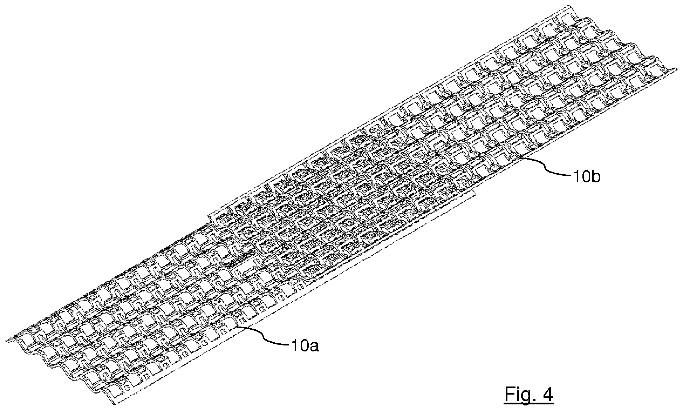

Figure 4 shows two grip mats 10a and 10b in use connected end to end. No additional components are used to connect the two grip mats 10 together, since the connection between the two grip mats 10 comes about through the physical structure of the wave-form elements 14 on each grip mat 10. It should be noted that the two grip mats 10 are orientated opposite to each other, with the first grip mat 10a being orientated as in the previous Figures and the second grip mat 10b being orientated upside down relative to the first grip mat 10a. This supports the interconnection between the two grip mats 10 as shown in this Figure.

The wave-form elements 14 that are spaced apart along the length of the grip mat 10 have spaces between them that are larger than the width of the wave-form elements 14 themselves. This means that when two grip mats 10 are connected together in the arrangement such that one grip mat 10a is upside down relative to the other grip mat 10b, that an interlocking occurs between the two sets of wave-form elements 14. The wave-form elements 14 of each respective grip mat 10 will locate within the spacing between the wave-form elements 14 of the other grip mat 10, creating a functioning connection between the two grip mats 10.

Figure 4 shows two grip mats 10a and 10b that have connected together by a user so that they are end to end, which is an example of how the user may deploy multiple grip mats 10, when for example, the user needs to create a long strip of high grip area on the slippery ground on which their vehicle is located. The arrangement of the wave-form elements 14 on each of the grip mats 10 supports connection in a wide range of different relative positions. In the Figure, the two grip mats 10 are shown in line, but this is not essential, the two grips mats 10 can overlap in lots of different ways, as desired by the user.

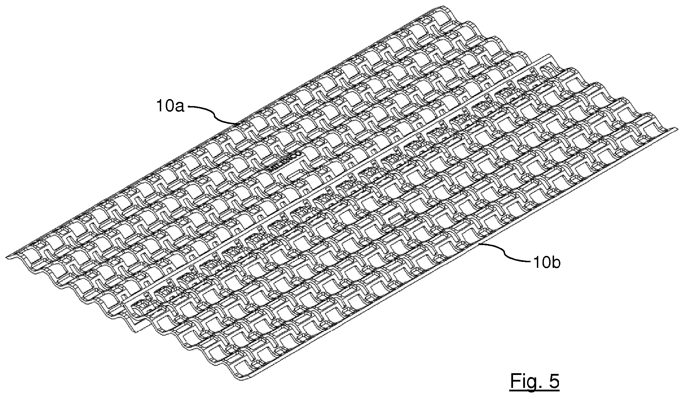

Figure 5 shows an alternative arrangement of the two grip mats 10, shown here arranged so that they are connected together side by side, with the two grip mats 10 connected along their respective long edges. As in the arrangement shown in Figure 4, the two grip mats 10 are connected so that the first grip mat 10a is orientated one way up and the second grip mat 10b is orientated the opposite way up. Here, the user has arranged the two grip mats 10 in order to create a wider surface area, in order to provide the necessary grip for the wheel of the user's vehicle, while driving over slippery ground.

As in the previous configuration shown in Figure 4, the wave-form elements 14 of each respective grip mat 10 locate within the spacing between the wave-form elements 14 of the other grip mat 10, creating a functioning connection between the two grip mats 10. The spacing between adjacent pairs of wave-form elements 14 is greater (although not by a significant amount) than the actual width of the wave-form elements 14 and so when two opposite orientated grip mats 10 are joined together, the wave-form elements 14 on one grip mat fit 10 snugly into the spacing between the wave-form elements 14 of the other grip mat 10. The temporary connection between two grip mats 10 is maintained in this way.

In Figures 4 and 5 two grip mats 10 are shown connected together in two different configurations. It should be understood that the user can arrange the two grip mats 10 in any configuration that suits the user's current needs. Indeed more than two grip mats 10 can be joined together in any arrangement that the user desires. The grip mats can be sold as a kit of parts containing, 2, 3 or 4 individual grip mats 10 as desired. When two or more grip mats 10 are placed on top of each other so that there is no overlap, with the grip mats all in the same orientation, then they will fit snugly together since the uniform waves of the wave-form elements 14 will stack on top of each other.

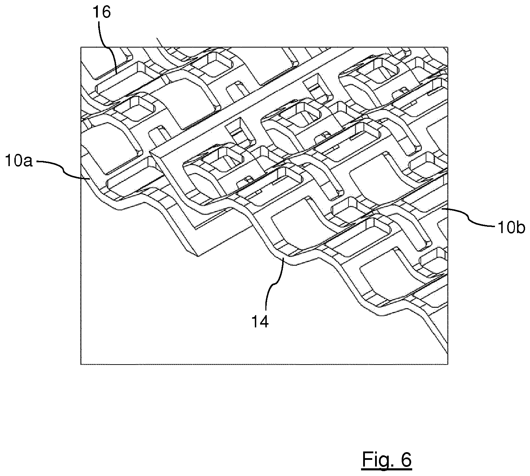

Figure 6 shows a close up of the connection between the two grip mats 10 of Figure 5, which shows in close-up the interlock between the two grip mats 10. As discussed above, each of the grip mats 10 is in the opposite orientation with respect to the other grip mat 10. At the overlapping edges of the two grip mats 10, part of the wave-form elements 14 of each grip mat 10 is located in the corresponding spacing between the wave-form elements 14 of the other grip mat 10. Shown in this Figure is the smallest possible overlap between two adjacent grip mats 10 that would lead to an interlock.

There is no limit to the amount of overlap that can be used with two grip mats 10, since the regular and repeating pattern of the wave-form elements 14 and the spacing between adjacent wave-form elements 14 means that as more overlap is created by the user of the grip mats 10, then the more of each wave-form pattern that will interlock into the corresponding spacing between adjacent wave-form elements 14 on the opposite grip mat 10. The user simply determines how they wish to connect together the two grip mats 10 and can create the interlock between adjacent grip mats by pushing together the two grip mats 10. When the user has finished with the grip mats 10, they can easily pull the two grip mats 10 apart, since the interlock is a temporary connection.

## Claims

1. A grip mat (10) for a vehicle comprising an elongate lattice-form body (12) comprising spaced apart wave-form elements (14) running across the width of the elongate body (12) and connecting elements (16) connecting adjacent wave-form elements (14), each wave-form element (14) being connected to each adjacent wave-form element (14) by a series of spaced apart connecting elements (16), wherein the width (A) of each wave-form element (14) is less than the width (B) of the spacing between adjacent wave-form elements (14).

2. A grip mat according to claim 1, wherein the wave-form elements (14) are regularly spaced along the length of the elongate body (12).

3. A grip mat according to claim 1 or 2, wherein the wave-form elements (14) are located perpendicular to the longitudinal axis of the elongate body (12) and the connecting elements (16) are located parallel to the longitudinal axis of the elongate body (12).

4. A grip mat according to any preceding claim, wherein the grip mat (10) is formed as a single piece of flexible plastics material.

5. A grip mat according to any preceding claim, wherein the grip mat (10) is of a flat planar construction.

6. A method of using two or more grip mats (10) according to any one of claims 1 to 5, the method comprising receiving two grip mats (10), laying a first grip mat (10a) on the ground, inverting a second grip mat (10b) relative to the first grip mat (10a), connecting together the first grip mat (10a) and the second grip mat (10b) such that the wave-form elements (14) of the first grip mat (10a) are located in the spacing between adjacent wave-form elements (14) of the second grip mat (10b) and the wave-form elements (14) of the second grip mat (10b) are located in the spacing between adjacent wave-form elements (14) of the first grip mat (10a).

## Patentansprüche

1. Traktionsmatte (10) für ein Fahrzeug, die einen länglichen gitterförmigen Körper (12) umfasst, der voneinander beabstandete wellenförmige Elemente (14), die über die Breite des länglichen Körpers (12) verlaufen, und Verbindungselemente (16), die benachbarte wellenförmige Elemente (14) verbinden, umfasst, wobei jedes wellenförmige Element (14) durch eine Reihe von voneinander beabstandeten Verbindungselementen (16) mit jedem benachbarten wellenförmigen Element (14) verbunden ist, wobei eine Breite (A) jedes wellenförmigen Elements (14) geringer ist als die Breite (B) des Zwischenraums zwischen benachbarten wellenförmigen Elementen (14).

2. Traktionsmatte nach Anspruch 1, wobei die wellenförmigen Elemente (14) regelmäßig entlang der Länge des länglichen Körpers (12) beabstandet sind.

3. Traktionsmatte nach Anspruch 1 oder 2, wobei die wellenförmigen Elemente (14) senkrecht zu der Längsachse des länglichen Körpers (12) angeordnet sind und die Verbindungselemente (16) parallel zu der Längsachse des länglichen Körpers (12) angeordnet sind.

4. Traktionsmatte nach einem der vorhergehenden Ansprüche, wobei die Traktionsmatte (10) als ein einziges Stück aus flexiblem Kunststoffmaterial geformt ist.

5. Traktionsmatte nach einem der vorhergehenden Ansprüche, wobei die Traktionsmatte (10) eine flache ebene Konstruktion hat.

6. Verfahren zum Verwenden von zwei oder mehr Traktionsmatten (10) nach einem Ansprüche 1 bis 5, wobei das Verfahren das Empfangen von zwei Traktionsmatten (10), das Legen einer ersten Traktionsmatte (10a) auf den Boden, das Umdrehen einer zweiten Traktionsmatte (10b) im Verhältnis zu der ersten Traktionsmatte (10a), das Verbinden der ersten Traktionsmatte (10a) und der zweiten Traktionsmatte (10b) miteinander derart, dass die wellenförmigen Elemente (14) der ersten Traktionsmatte (10a) in dem Zwischenraum zwischen benachbarten wellenförmigen Elementen (14) der zweiten Traktionsmatte (10b) angeordnet sind und die wellenförmigen Elemente (14) der zweiten Traktionsmatte (10b) in dem Zwischenraum zwischen benachbarten wellenförmigen Elementen (14) der ersten Traktionsmatte (10a) angeordnet sind, umfasst.

## Revendications

1. Tapis adhérent (10) pour véhicule, comprenant un corps allongé en forme de treillis (12) comprenant des éléments de forme ondulée espacés (14) passant à travers la largeur du corps allongé (12) et des éléments de connexion (16) connectant des éléments de forme ondulée adjacents (14), chaque élément de forme ondulée (14) étant connecté à chaque élément de forme ondulée adjacent (14) par une série d'éléments de connexion espacés (16), la largeur (A) de chaque élément de forme ondulée (14) étant inférieure à la largeur (B) de l'espacement entre des éléments de forme ondulée adjacents (14).

2. Tapis adhérent selon la revendication 1, dans lequel les éléments de forme ondulée (14) sont espacés régulièrement sur la longueur du corps allongé (12).

3. Tapis adhérent selon la revendication 1 ou 2, dans lequel les éléments de forme ondulée (14) sont situés perpendiculairement à l'axe longitudinal du corps allongé (12) et les éléments de connexion (16) sont situés parallèlement à l'axe longitudinal du corps allongé (12).

4. Tapis adhérent selon l'une quelconque des revendications précédentes, dans lequel le tapis adhérent (10) est conformé sous la forme d'une pièce unique en matière plastique flexible.

5. Tapis adhérent selon l'une quelconque des revendications précédentes, dans lequel le tapis adhérent (10) a une structure planaire plate.

6. Procédé d'utilisation de deux tapis adhérents ou plus (10) selon l'une quelconque des revendications 1 à 5, le procédé comprenant la réception de deux tapis adhérents (10), la pose d'un premier tapis adhérent (10a) sur le sol, l'inversion d'un second tapis adhérent (10b) par rapport au premier tapis adhérent (10a), la connexion ensemble du premier tapis adhérent (10a) et du second tapis adhérent (10b) de manière à ce que les éléments de forme ondulée (14) du premier tapis adhérent (10a) se situent dans l'espacement entre des éléments de forme ondulée adjacents (14) du second tapis adhérent (10b) et que les éléments de forme ondulée (14) du second tapis adhérent (10b) se situent dans l'espacement entre des éléments de forme ondulée adjacents (14) du premier tapis adhérent (10a) .
